# EUROPEAN PATENT APPLICATION

(11) **EP 4 333 498 A1**
(43) Date of publication of application: **06.03.2024**
(21) Application number: 21938282.7
(22) Date of filing: 27.04.2021
(51) Int. Cl.: H04W 28/16

(54) **QOS CONTROL METHOD AND APPARATUS, DEVICES, AND STORAGE MEDIUM**

(71) Applicant: GUANGDONG OPPO MOBILE TELECOMMUNICATIONS CORP., LTD., Dongguan, Guangdong 523860 (CN)
(72) Inventor: GUO, Yali, Dongguan, Guangdong 523860 (CN)
(74) Representative: Novagraaf Technologies
(86) International application number: PCT/CN2021/090309
(87) International publication number: WO 2022/226795

(57) **Abstract**

The present application discloses a QoS control method and apparatus, devices, and a storage medium, which relate to the field of mobile communications. The method comprises: on the basis of trigger conditions corresponding to at least one set of QoS configuration information of a data stream, determining QoS configuration information corresponding to trigger conditions which are met by state parameters; and performing QoS control on the data stream on the basis of the determined QoS configuration information. By directly determining QoS configuration information by means of an access network device, the limitation of a core network device being required to configure the access network device so as to change the QoS configuration information is overcome, thereby preventing delays caused by communication between the core network device and the access network device, and increasing the communication efficiency.

## Description

### TECHNICAL FIELD

The present disclosure relates to mobile communication technologies, and in particular to a QoS control method, an apparatus, a device, and a storage medium.

### BACKGROUND

In an NR (New Radio) system, a terminal device performs an access layer connection with an access network device through an Uu (a communication interface) interface, and then performs wireless data transmission.

After the terminal device is connected to the access network device, a core network device configures QoS (Quality of Service) flow configuration information of each QoS flow for the access network device, and the access network device performs QoS control based on the QoS flow configuration information configured by the core network device.

However, as the QoS flow configuration information is configured by the core network device for the access network device, and there is a delay in communication between the core network device and the access network device, the QoS flow configuration information is not timely updated by the access network device, and low communication efficiency is resulted.

### SUMMARY OF THE DISCLOSURE

Embodiments of the present disclosure provide a QoS control method, an apparatus, a device, and a storage medium, which breaks the restriction that a core network device needs to configure for an access network device to change QoS configuration information, then avoids a delay caused by communication between the core network device and the access network device, and improves communication efficiency. Technical solutions are described as follows.

According to one aspect of the present disclosure, a QoS control method is provided. The method is performed by an access network device. The method includes: determining QoS configuration information corresponding to a trigger condition which meets a state parameter, based on at least one trigger condition corresponding to at least one group of QoS configuration information of a data flow; performing QoS control on the data flow based on the QoS configuration information.

According to one aspect of the present disclosure, a QoS control method is provided. The method is performed by a core network device. The method includes: sending at least one group of QoS configuration information of a data flow and a trigger condition corresponding to each group of QoS configuration information to an access network device. The at least one group of QoS configuration information and the trigger condition corresponding to each group of QoS configuration information are configured to indicate the access network device to perform QoS control on the data flow.

According to one aspect of the present disclosure, a QoS control method is provided. The method is performed by a terminal device. The method includes: receiving QoS configuration information and/or a trigger condition corresponding to the QoS configuration information. The QoS configuration information and/or the trigger condition corresponding to the QoS configuration information are determined by an access network device based on at least one trigger condition corresponding to at least one group of QoS configuration information of a data flow and a state parameter, and the QoS configuration information is configured to indicate the access network device to perform the QoS control on the data flow.

According to one aspect of the present disclosure, a QoS control apparatus, which is arranged in an access network device, is provided. The apparatus includes an information determination module and a control module. The information determination module is configured to determine QoS configuration information corresponding to a trigger condition which meets a state parameter, based on at least one trigger condition corresponding to at least one group of QoS configuration information of a data flow. The control module is configured to perform QoS control on the data flow based on the QoS configuration information.

According to one aspect of the present disclosure, a QoS control apparatus, which is arranged in a core network device, is provided. The apparatus includes a sending module. The sending module is configured to send at least one group of QoS configuration information of a data flow and a trigger condition corresponding to each group of QoS configuration information to an access network device. The at least one group of QoS configuration information, and the trigger condition corresponding to each group of QoS configuration information are configured to indicate the access network device to perform QoS control on the data flow.

According to one aspect of the present disclosure, a QoS control apparatus, which is arranged in a terminal device, is provided. The apparatus includes a receiving module. The receiving module is configured to receive QoS configuration information and/or a trigger condition corresponding to the QoS configuration information. The QoS configuration information and/or the trigger condition corresponding to the QoS configuration information are determined by an access network device based on at least one trigger condition corresponding to at least one group of QoS configuration information of a data flow and a state parameter, and the QoS configuration information is configured to indicate the access network device to perform QoS control on the data flow.

According to one aspect of the present disclosure, an access network device is provided. The access network device includes a processor, a transceiver connected to the processor, and a memory for storing an executable program code of the processor. The processor is configured to load and execute the executable program code to implement the QoS control methods as described in the above aspects.

According to one aspect of the present disclosure, a core network device is provided. The core network device includes a processor, a transceiver connected to the processor, and a memory for storing an executable program code of the processor. The processor is configured to load and execute the executable program code to implement the QoS control methods as described in the above aspects.

According to one aspect of the present disclosure, a terminal device is provided. The terminal device includes a processor, a transceiver connected to the processor, and a memory for storing an executable program code of the processor. The processor is configured to load and execute the executable program code to implement the QoS control method as described above.

According to one aspect of the present disclosure, a computer-readable storage medium is provided. An executable program code is stored in the readable storage medium, and the executable program code is loaded and executed by a processor to implement the above-mentioned QoS control methods.

According to one aspect of the present disclosure, a chip is provided. The chip includes programmable logic circuits and/or program instructions. When the chip runs on an access network device, a core network device or a terminal device, the chip is configured to implement the QoS control methods as described above.

According to one aspect of the present disclosure, a computer program product is provided. When the computer program product is executed by a processor of an access network device, a core network device or a terminal device, the computer program product is configured to implement the QoS control methods described above.

The technical solutions provided by the embodiments of the present disclosure at least include the following beneficial effects.

In the method, apparatus, device, and storage medium provided in the embodiments of the present disclosure, the access network device directly determines a met trigger condition based on the state parameter, and adopts QoS configuration information corresponding to the met trigger condition to perform QoS control. Thus, the QoS configuration information directly determined by the access network device, which breaks a restriction that the core network device needs to configure for the access network device to change the QoS configuration information. And thus, this avoids a delay caused by communication between the core network device and the access network device and improves communication efficiency.

### BRIEF DESCRIPTION OF THE DRAWINGS

In order to more clearly illustrate technical solutions in embodiments of the present disclosure, the drawings that need to be configured in the description of the embodiments will be briefly introduced below. Obviously, the drawings in the following description are only some embodiments of the present disclosure. For those skilled in the art, other drawings may also be obtained based on these drawings without creative effort.
FIG. 1 is a block diagram of a communication system according to an embodiment of the present disclosure.
FIG. 2 is an architecture diagram of a 5G communication network system according to an embodiment of the present disclosure.
FIG. 3 is a schematic diagram of a QoS model of a 5G communication network according to an embodiment of the present disclosure.
FIG. 4 is a flowchart of a QoS control method according to an embodiment of the present disclosure.
FIG. 5 is a flowchart of a QoS control method according to an embodiment of the present disclosure.
FIG. 6 is a flowchart of a QoS control method according to an embodiment of the present disclosure.
FIG. 7 is a flowchart of a QoS control method according to an embodiment of the present disclosure.
FIG. 8 is a block diagram of a QoS control apparatus according to an embodiment of the present disclosure.
FIG. 9 is a block diagram of a QoS control apparatus according to an embodiment of the present disclosure.
FIG. 10 is a block diagram of a QoS control apparatus according to an embodiment of the present disclosure.
FIG. 11 is a block diagram of a QoS control apparatus according to an embodiment of the present disclosure.
FIG. 12 is a block diagram of a QoS control apparatus according to an embodiment of the present disclosure.
FIG. 13 is a structural schematic diagram of a communication device according to an embodiment of the present disclosure.

### DETAILED DESCRIPTION

In order to make the purpose, technical solutions and advantages of the present disclosure clearer, embodiments of the present disclosure will be further described in detail below in conjunction with the accompanying drawings.

First, an application scenario of the present disclosure is described.

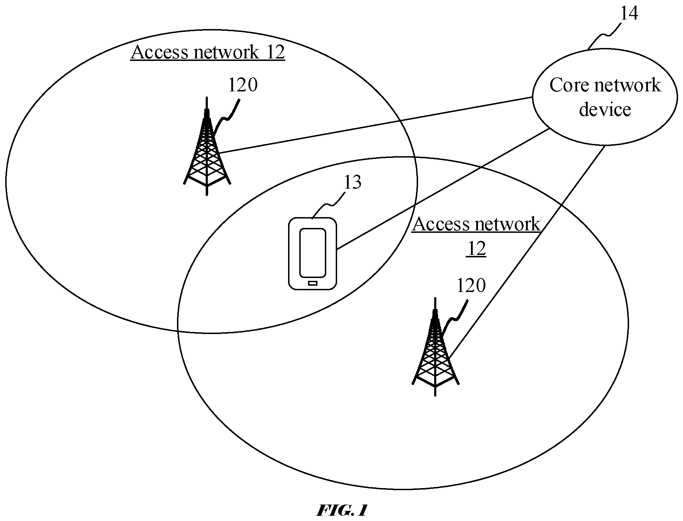

FIG. 1 is a block diagram of a communication system according to an embodiment of the present disclosure. The communication system may include an access network 12, a terminal device 13, and a core network device 14.

The access network 12 includes multiple network devices 120. The network device 120 may be a base station, which is a device deployed in the access network to provide wireless communication function for a terminal device. The base station may include a macro base station, a micro base station, a relay station, an access point and others with various forms. In systems using different wireless access technologies, names of devices with base station functions may be different. For example, it is called an eNodeB or an eNB in an LTE system, and it is called a gNodeB or a gNB in a 5G NR-U system. As communication technologies evolve, the description of "base station" may change. For convenience, the above-mentioned devices that provide the wireless communication function for the terminal device 13 are collectively referred to as access network devices in embodiments of the present disclosure.

The terminal device 13 may include various devices such as a handheld device with a wireless communication function, a vehicle-mounted device, a wearable device, a computing device or other processing devices connected to wireless modems, as well as various forms of devices such as a user equipment, a mobile station (MS), a terminal device and so on. For convenience of description, the devices mentioned above are collectively referred to as terminal devices. The access network device 120 and the terminal device 13 communicate with each other through a certain air interface technology, such as an Uu interface.

The core network device 14 includes various core network elements with various management functions. For example, the core network elements include an AMF (Access and Mobility Management Function) network element, a SMF (Session Management Function) network element, a PCF (Policy Control Function) network element, an UPF (User Plane Function) network element, a NSSF (Network Slice Selection Function) network element, an AUSF (Authentication Server Function) network element, an UDM (Unified Data Management) network element, an AF (present disclosure Function) network element, etc.

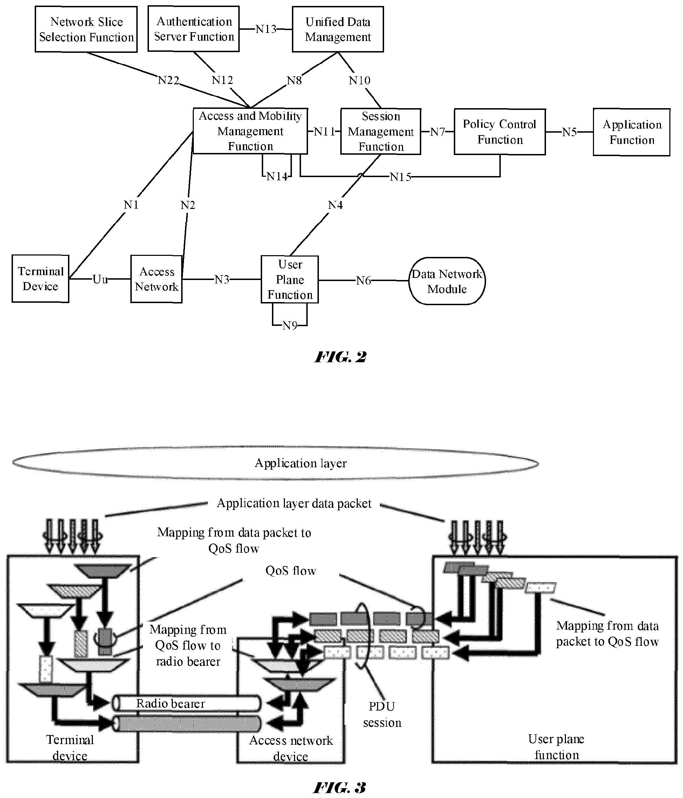

In some embodiments, an access network, a terminal device, and a core network device in the present disclosure are applied in a 5G communication network. For example, an architecture diagram of a 5G communication network system is shown in FIG. 2. The terminal device is connected to the access network in an access layer through an Uu interface to exchange access layer messages and wireless data transmission. The terminal device is connected to an AMF in a non-access layer through a N1 interface to exchange non-access layer messages. The AMF is a mobility management function in the core network, and a SMF is a session management function in the core network. In addition to the mobility management for the terminal device, the AMF is also responsible for forwarding session management related messages between the terminal device and the SMF. The PCF is a policy management function in the core network, and is responsible for formulating policies related to mobility management, session management, and charging of the terminal device. The UPF is a user plane function in the core network, performs data transmission with an external data network through a N6 interface, and performs data transmission with the access layer through a N3 interface.

The technical solution of the embodiments of the present disclosure may be performed in various communication systems such as a Global System of Mobile communication (GSM) system, a Code Division Multiple Access (CDMA) system, a Wideband Code Division Multiple Access (WCDMA) system, a General Packet Radio Service (GPRS), a Long Term Evolution (LTE) system, a LTE Frequency Division Duplex (FDD) system, a LTE Time Division Duplex (TDD) system, Advanced Long Term Evolution (LTE-A) system, a New Radio (NR) system, an evolution system of a NR system, a LTE-based access to unlicensed spectrum (LTE-U) system, a NR-U system, a Universal Mobile Telecommunication System (UMTS), a Worldwide Interoperability for Microwave Access (WiMAX) communication system, a Wireless Local Area Networks (WLAN), a Wireless Fidelity (Wireless Fidelity, WiFi), a next generation communication system or other communication systems, etc.

Generally speaking, the number of connections supported by traditional communication systems is limited and easy to be implemented. However, with the development of communication technologies, mobile communication systems will not only support traditional communication, but also support, for example, Device to Device (D2D) communication, Machine to Machine (M2M) communication, Machine Type Communication (MTC), Vehicle to Vehicle (V2V) communication, and Vehicle to everything (V2X) system, etc. The embodiments of the present disclosure may also be performed in these communication systems.

In the present disclosure, QoS control of a 5G communication network is controlled based on a QoS flow. FIG. 3 is a schematic diagram of a QoS model of a 5G communication network provided by an embodiment of the present disclosure. As shown in FIG. 3, a terminal device accesses to a 5G communication network through an Uu interface, and establishes a QoS flow for data transmission under the control of the SMF. The SMF configures QoS configuration information of each QoS flow for the access network device.

The QoS configuration information includes information such as a 5QI (5G QoS Identifier), ARP (Allocation and Retention Priority), and a code rate requirement. The 5QI is configured to indicate an index value of a QoS feature such as a delay requirement, a bit error rate, etc. The ARP is a priority of a resource allocated or retained by the access network device for the QoS flow. For each QoS flow, the access network device schedules a radio resource to perform QoS control on the QoS flow according to the QoS flow configuration information received from the SMF.

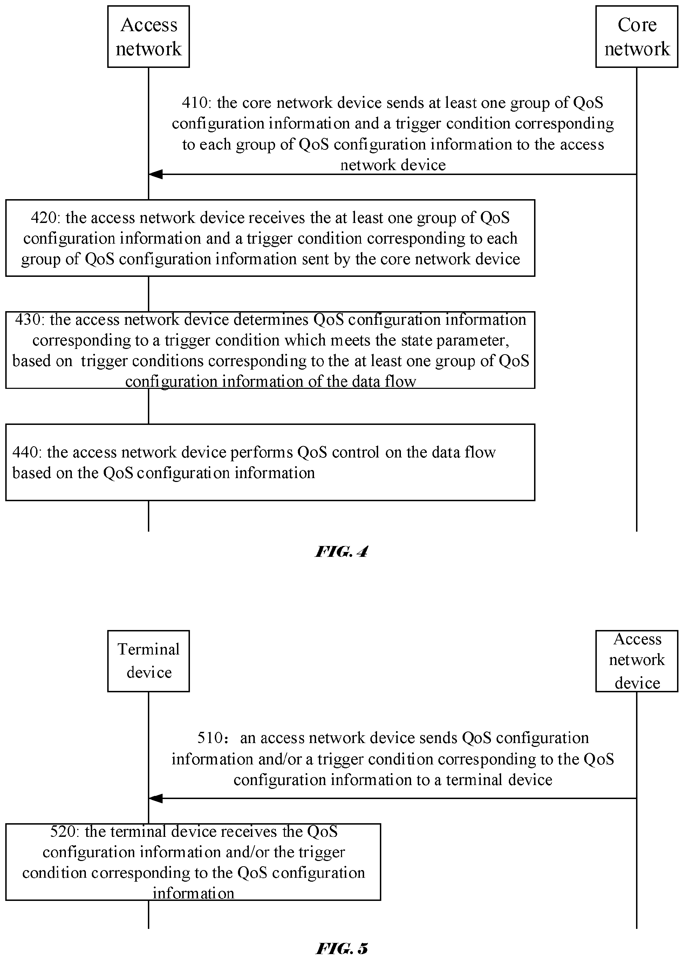

FIG. 4 is a flow chart of a QoS control method according to an embodiment of the present disclosure. The method is performed by an access network device and a core network device shown in FIG. 1. The method includes at least some of the following contents.

At 410, the core network device sends at least one group of QoS configuration information and a trigger condition corresponding to each group of QoS configuration information to the access network device.

In some embodiments, the core network device sends identification information of each group of QoS configuration information to the access network device.

In some embodiments, the core network device sends a priority of each group of QoS configuration information to the access network device.

In some embodiments, the core network device sends indication information, at least one group of QoS configuration information, and a trigger condition corresponding to each group of QoS configuration information to the access network device.

The indication information is configured to indicate a data flow. The indication information includes an identifier of the data flow, or the indication information includes a feature of the data flow.

It should be noted that all parameters sent by the core network device in the embodiments of the present disclosure are described in the following embodiments of the access network device, which are referred to the description at 420-440 for details.

At 420, the access network device receives the at least one group of QoS configuration information and the trigger condition corresponding to each group of QoS configuration information sent by the core network device.

In embodiments of the present disclosure, the at least one group of QoS configuration information is configuration information of one data flow. After the core network device sends the at least one group of QoS configuration information and the trigger condition corresponding to each group of QoS configuration information to the access network device, the access network device receives the at least one group of QoS configuration information and the trigger condition corresponding to each group of QoS configuration information, and subsequently determines QoS configuration information of which a trigger condition is met, based on the trigger condition corresponding to each group of QoS configuration information.

A trigger condition is configured to indicate a condition that corresponding QoS configuration information is used. The access network device determines QoS configuration information configured for the QoS control by itself with a trigger condition as a restriction condition, and there is no need for the core network device to configure the QoS configuration information for the access network device. The data flow includes at least one data packet, which is transmitted between the access network device and the terminal device.

In some embodiments, each group of QoS configuration information and a corresponding trigger condition are stored in a data set.

In some embodiments, the QoS configuration information includes at least one of the following.
(1) A QoS index identifier.

The QoS index identifier is represented by 66, 68, 80 or other numbers.

In some embodiments, if the present embodiment of the present disclosure is performed in a 5G communication network system, the QoS index identifier is a 5QI, and the 5QI identifies the QoS index identifier.

(2) A scheduling priority.

(3) Allocation and retention priority.

(4) A code rate requirement.

(5) A transmission delay requirement.

(6) A bit error rate (BER)requirement.

It should be noted that the scheduling priority, the delay requirement, and the bit error rate requirement in embodiments of the present disclosure may be indicated by the QoS index identifier. That is, the QoS index identifier corresponds the scheduling priority, the delay requirement, and the bit error rate.

In an example where the present disclosure is performed in a 5G communication network system and the QoS index identifier is a 5QI, the QoS index identifier and corresponding delay requirement and bit error rate are shown in Table 1:

**Table 1**

| 5QI Value | Delay requirement | Bit error rate |
|---|---|---|
| 66 | 100 milliseconds | 10⁻² |

In some embodiments, the access network device receives identification information of each group of QoS configuration information sent from the core network device.

The core network device will not only send QoS configuration information to the access network device, but also send identification information of the QoS configuration information to the access network device. The identification information is used to indicate the QoS configuration information. Thus, the access network device may use the identification information to communicate with the core network device subsequently.

Identification information of each group of QoS configuration information is configured by the core network device, or configured by an operator, or configured in other ways. The identification information of each group of QoS configuration information is represented by an index identifier, or by a name of the QoS configuration information, or in other ways.

For example, the identification information of each group of QoS configuration information is represented by the index identifier, and the identification information is 0, 1, 2, 3 or other numerical values.

In some embodiments, the access network device receives a priority of each group of QoS configuration information sent by the core network device.

The core network device configures a priority of each group of QoS configuration information for the access network device, such that the access network device determines the selected QoS configuration information based on the priority of each group of QoS configuration information, after determining a plurality of groups of QoS configuration information of which trigger conditions are met correspondingly.

In some embodiments, the access network device receives indication information, at least one group of QoS configuration information, and a trigger condition corresponding to each group of QoS configuration information sent by the core network device.

The indication information is configured to indicate the data flow. When the core network device configures QoS configuration information for the access network device, in order to indicate the data flow corresponding to the QoS configuration information, the core network device not only sends the at least one group of QoS configuration information and the trigger condition corresponding to each group of QoS configuration information to the access network device, and also send the indication information for indicating the data flow to the access network device at the same time. The access network device may determine a data flow corresponding to QoS configuration information and a corresponding trigger condition based on the indication information, after receiving the indication information, the at least one group of QoS configuration information, and the trigger condition corresponding to each group of QoS configuration information sent by the core network device.

In some embodiments, the indication information includes an identifier of the data flow, or, the indication information includes a feature of the data flow. The identifier of the data flow is an index identifier of the data flow or a name of the data flow. For example, the index identifier of the data flow is A, B, C or other identifiers. The name of the data flow is data flow K, data flow F or other names.

It should be noted that, a data flow is taken as an example for description in embodiments of the present disclosure. In another embodiment, the data flow is a radio bearer, or the data flow is a QoS flow, or the data flow is a data transmission tunnel, or the data flow is a service data flow.

It should be noted that operations at 410-420 are taken as an example for illustration in embodiments of the present disclosure. In another embodiment, operations at 410-420 are optional operations, and the access network device may directly perform an operation at 430, and operations at 410-420 are in a previous process.

At 430, the access network device determines QoS configuration information corresponding to a trigger condition which meets a state parameter, based on at least one trigger condition corresponding to the at least one group of QoS configuration information of the data flow.

The state parameter is a current state. For example, the state parameter is at least one of current time information, a state of an access network device, and a state of a terminal device.

In the embodiments of the present disclosure, if the access network device needs to transmit data with the terminal device, the access network device firstly determines QoS configuration information configured for QoS control based on a data flow. Since the access network device has determined a current state parameter, and each group of QoS configuration information of the data flow corresponds to a trigger condition, the access network device determines QoS configuration information of which a corresponding trigger condition meets the state parameter.

In some embodiments, the state parameter includes at least one of the following.
(1) Current time information.
(2) Current location information of the terminal device to which the data flow belongs.

The current location information of the terminal device is configured to indicate a current location of the terminal device.

(3) Network information of the terminal device.

The network information of the terminal device is configured to indicate a network to which the terminal device currently accesses.

(4) Current access information of the terminal device.

The current access information of the terminal device is configured to indicate a state of a network to which the terminal device accesses.

(5) Current load information of the access network device.

(6) Current capability information of the terminal device.

The current capability information of the terminal device is configured to indicate a current processing capability of the terminal device.

Each type of state parameter is conceptually illustrated with an example below.
(1) The current time information is a current time point.

For example, the current time point is 9:00 a.m., 3:00 p.m., or other time points.

(2) The current location information of the terminal device is a current cell of the terminal device, or a current tracking area of the terminal device, or a current latitude and longitude of the terminal device.

For example, information about the current cell of the terminal device is identification information of the cell, or other information of the cell. Information about the current tracking area of the terminal device is represented by a tracking area code, or expressed in other ways. Information about the current latitude and longitude of the terminal device is represented by two parameters, longitude and latitude.

(3) The network information of the terminal device is PLMN (Public Land Mobile Network) or a network slice of the terminal device.

The PLMN of the terminal device is indicated by a PLMN identifier, or expressed in other ways. The network slice of the terminal device is indicated by a network slice identifier, or expressed in other ways.

(4) The current access information of the terminal device is a type of a network to which the terminal device accesses, or a frequency used by the terminal device.

The type of the network to which the terminal device accesses includes a 3G network, a 4G network, a 5G network, a 6G network, or other networks. The frequency adopted by the terminal device is 850 MHz, 900 MHz, or other frequencies.

(5) The current load information of the access network device is a current load capacity of the access network device, or a current load occupancy rate of the access network device.

The access network device is responsible for communicating with the terminal device, which also means that the access network device may currently be connected to multiple terminal devices. The current load capacity of the access network device is represented by the number of channels currently occupied by communication with the terminal devices, or expressed in other ways. The current load occupancy rate of the access network device is expressed by a ratio of the number of the occupied channels to the total number of supported channels, or expressed in other ways.

(6) The current capability information of the terminal device is a current load capacity of the terminal device, or a load occupancy rate of the terminal device, or a computing capability of the terminal device, or a service processing capability of the terminal device.

The current load capacity of the terminal device is represented by a current cache capacity. For example, the cache capacity is 1GB, 2GB, or other values. The computing capability of the terminal device is expressed by a performance index of its CPU, or expressed in other ways. The service processing capability of the terminal device is represented by a memory capacity of the terminal device, or represented in other ways.

It should be noted that, that the access network device obtains a state parameter is taken as an example for description in embodiments of the present disclosure. In another embodiment, the state parameter related to the terminal device needs to be sent by the terminal device to the access network device, and the access network device receives the state parameter sent by the terminal device.

The state parameter related to the terminal device may include at least one of current location information of the terminal device, current network information of the terminal device, current access information of the terminal device, and current capability information of the terminal device.

In some embodiments, the trigger condition includes at least one of the following.
(1) Time information. The time information is configured to specify a current time when the trigger condition meets a state parameter.
(2) Location information. The location information is configured to specify a location of the terminal device when the trigger condition meets a state parameter.
(3) Network information. The network information is configured to specify a network of the terminal device when the trigger condition meets a state parameter.
(4) Access information. The access information is configured to specify a parameter of a network to which the terminal device accesses when the trigger condition meets a state parameter.
(5) Load information. The load information is configured to specify a load state of the access network device when the trigger condition meets a state parameter.
(6) Capability information. The capability information is configured to specify a processing capability of the terminal device when the trigger condition meets a state parameter.

Each item of information included in the trigger condition specifies a condition that QoS configuration information corresponding to the trigger condition is used. If the access network device determines that a trigger condition meets a state parameter, it means that the state parameter is met by each item of information included in the trigger condition.

The following is an example of a trigger condition for illustration.
(1) The time information is a time point or a time duration.

For example, if the time information is a time point, and time information corresponding to QoS configuration information is 2:00 p.m., the access network device determines that the time information in the trigger condition meets the current time information when the access network device determines that the current time information is 2:00 p.m. For another example, if the time information is a time duration, and time information corresponding to QoS configuration information is from 2:00 p.m. to 4:00 p.m., the access network device determines that the time information in the trigger condition meets the current time information when the access network device determines that the current time information is any time point from 2:00 p.m. to 4:00 p.m.

(2) The location information is cell information, or tracking area information, or longitude and latitude information.

For example, if the location information is cell information, and cell information corresponding to QoS configuration information is cell ID 1, it is determined that the cell information in the trigger condition meets the current location information when the cell information included in a state parameter acquired by the access network device is cell ID 1.

(3) The network information is PLMN information or network slice information.

For example, if the network information is PLMN information, and PLMN information corresponding to QoS configuration information is PLMN8, it is determined that the network information in the trigger condition meets the current network information when PLMN information included in a state parameter obtained by the access network device is PLMN8.

(4) The access information is a network type or a frequency.

For example, if the access information is a frequency, and a frequency corresponding to QoS configuration information is between 800 MHz and 1000 MHz, it is determined that the access information in the trigger condition meets the current access information when a frequency included in a state parameter obtained by the access network device is 850 MHz, which is within a frequency range of 800 MHz to 1000 MHz.

(5) The load information is a load capacity of the access network device or a load occupancy rate of the access network device.

For example, if the load information is a load occupancy rate, and the load occupancy rate corresponding to QoS configuration information is between 50% and 70%, and the load occupancy rate included in a state parameter obtained by the access network device is 60%, which is within a range of 50% to 70% corresponding to the QoS configuration information, it is determined that the load information in the trigger condition meets the current load information.

(6) The capability information is a load capacity, or a load occupancy rate, or a computing capability, or a service processing capability of the terminal device.

For example, if the capability information is a load occupancy rate, and the load occupancy rate corresponding to QoS configuration information is between 40% and 50%, the load occupancy rate included in the state parameter obtained by the access network device is 450%, which is within a range of 40% to 50% corresponding to the QoS configuration information, it is determined that the capability information in the trigger condition meets the current capability information.

It should be noted that if a trigger condition includes multiple items of information, the access network device needs to determine whether each item of information in the trigger condition meets a state parameter when determining that the trigger condition meets the state parameter. If each item of information in the trigger condition meets the state parameter, the access network device determines that the trigger condition meets the state parameter.

For example, the trigger condition includes capability information, access information, and time information. Alternatively, the trigger condition includes access information, network information, capability information, access information, and location information. Alternatively, there are other cases, which are not limited in the present disclosure.

At 440, the access network device performs QoS control on the data flow based on the QoS configuration information.

In embodiments of the present disclosure, after determining QoS configuration information corresponding to a trigger condition which meets the state parameter, the access network device may determine a parameter configured for QoS control and included in the QoS configuration information, and then perform QoS control based on the parameter included in the QoS configuration information.

In some embodiments, the QoS configuration information corresponding to a trigger condition which meets the state parameter, which is determined by the access network device, includes a plurality of groups of QoS configuration information. The access network device determines a group of QoS configuration information with a highest priority in the plurality of groups of QoS configuration information, and performs the QoS control on the data flow based on the group of QoS configuration information with the highest priority.

It should be noted that, in embodiments of the present disclosure, when the core network device configures QoS configuration information and a trigger condition of the QoS configuration information for the access network device, the core network device also configures a priority of the QoS configuration information. Thus, the access network device may determine a group of QoS configuration information with the highest priority according to a priority of each group of QoS configuration information in the plurality of groups of QoS configuration information.

In some embodiments, after determining the QoS configuration information, the access network device also needs to notify the terminal device of the QoS configuration information and/or a corresponding trigger condition configured for QoS control.

In a possible implementation, the access network device sends the QoS configuration information and/or the trigger condition corresponding to the QoS configuration information to the terminal device.

In another possible implementation, the access network device sends identification information of the QoS configuration information and/or a trigger condition corresponding to the QoS configuration information to the terminal device.

In some embodiments, after determining the QoS configuration information, the access network device also needs to notify the core network device of the QoS configuration information and/or a corresponding trigger condition configured for the QoS control.

In a possible implementation, the access network device sends the QoS configuration information and/or the trigger condition corresponding to the QoS configuration information to the core network device.

In another possible implementation, the access network device sends identification information of the QoS configuration information and/or the trigger condition corresponding to the QoS configuration information to the core network device.

It should be noted, that the access network device sends the QoS configuration information is just taken as an example for description in embodiments of the present disclosure. In another embodiment, the access network device sends a part of information included in the QoS configuration information.

For example, the QoS configuration information includes allocation and retention priority, a code rate requirement, and a transmission delay requirement. The access network device may send the allocation and retention priority and the code rate requirement in the QoS configuration information, or send the code rate requirement and the transmission delay requirement in QoS configuration information.

The embodiments of the present disclosure provide a QoS control method. The access network device directly determines a met trigger condition based on the state parameter, and adopts QoS configuration information corresponding to the met trigger condition to perform QoS control. Thus, the QoS configuration information directly determined by the access network device, which breaks a restriction that the core network device needs to configure for the access network device to change the QoS configuration information. And thus, this avoids a delay caused by communication between the core network device and the access network device and improves communication efficiency.

In a case that the access network device has determined the QoS configuration information for the QoS control in the embodiment shown in FIG. 4, FIG. 5 is a flow chart of a QoS control method provided in an embodiment according to the present disclosure, which is performed by the terminal device and the access network device shown in FIG. 1. The method includes at least some of the following contents.

At 510, the access network device sends QoS configuration information and/or a trigger condition corresponding to the QoS configuration information to a terminal device.

The QoS configuration information and/or the trigger condition corresponding to the QoS configuration information are determined by the access network device based on at least one trigger condition corresponding to at least one group of QoS configuration information of a data flow and a state parameter. The QoS configuration information is configured to indicate the access network device to perform QoS control on the data flow.

At 520, the terminal device receives the QoS configuration information and/or the trigger condition corresponding to the QoS configuration information.

In some embodiments, the access network device sends identification information of the QoS configuration information and/or the trigger condition corresponding to the QoS configuration information to the terminal device. The terminal device receives the identification information of the QoS configuration information and/or the trigger condition corresponding to the QoS configuration information.

It should be noted, that the terminal device receives the QoS configuration information and/or the trigger condition corresponding to the QoS configuration information is just taken as an example for illustration in embodiments of the present disclosure. In another embodiment, before operations at 510, the terminal device sends the state parameter to the access network device, and the access network device may determine the QoS configuration information corresponding to the met trigger condition based on the state parameter.

The state parameter includes at least one of current time information; current location information of the terminal device to which the data flow belongs; current network information of the terminal device; current access information of the terminal device; current load information of access network device; and current capability information of the terminal device.

In some embodiments, the trigger condition includes at least one of time information; location information; network information; access information; load information; and capability information.

In some embodiments, the time information is a time point, or a time duration.

In some embodiments, the location information is cell information, or tracking area information, or latitude and longitude information.

In some embodiments, the network information is PLMN information or network slice information.

In some embodiments, the access information is a network type, or a frequency.

In some embodiments, the load information is a load capacity of the access network device or a load occupancy rate of the access network device.

In some embodiments, the capability information is a load capacity of the terminal device, or a load occupancy rate of the terminal device, or a computing capability of the terminal device, or a service processing capability of the terminal device.

In the method provided by the present embodiment of the present disclosure, the access network device directly determines a met trigger condition based on the state parameter, and adopts QoS configuration information corresponding to the met trigger condition to perform QoS control. Thus, the QoS configuration information directly determined by the access network device, which breaks a restriction that the core network device needs to configure for the access network device to change the QoS configuration information. And thus, this avoids a delay caused by communication between the core network device and the access network device and improves communication efficiency. Moreover, the access network device sends the QoS configuration information and/or the trigger condition corresponding to the QoS configuration information to the terminal device, and then the terminal device may also perform data transmission based on the QoS configuration information, which improves communication efficiency.

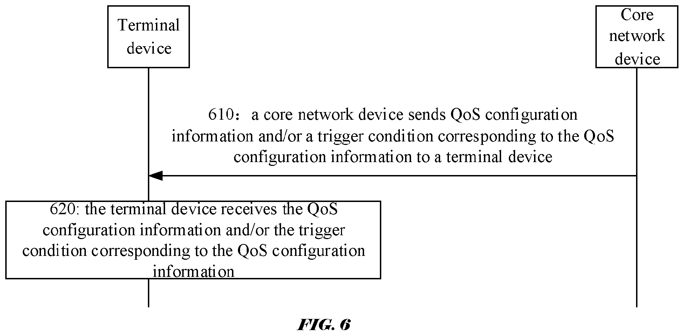

It should be noted that, in embodiment as shown in FIG. 5, the access network device sending the QoS configuration information and/or the triggering condition corresponding to the QoS configuration information to the terminal device is just taken as an example for illustration. In another embodiment, it may also be the core network device that send the QoS configuration information and/or the trigger condition corresponding to the QoS configuration information to the terminal device. FIG. 6 is a flowchart of a QoS control method according to an embodiment of the present disclosure, which is performed by the terminal device and the core network device as shown in FIG. 1. The method includes at least some of the following contents.

At 610, the core network device sends QoS configuration information and/or a trigger condition corresponding to the QoS configuration information to the terminal device.

The QoS configuration information and/or the trigger condition corresponding to the QoS configuration information are determined by the access network device based on at least one trigger condition corresponding to at least one group of QoS configuration information of a data flow and a state parameter. The QoS configuration information is configured to indicate the access network device to perform QoS control on the data flow.

After determining the QoS configuration information and/or the trigger condition corresponding to the QoS configuration information, the access network device sends the QoS configuration information and/or the trigger condition corresponding to the QoS configuration information to the core network device, and then the core network device sends the QoS configuration information and/or the trigger condition corresponding to the QoS configuration information to the terminal device.

At 620, the terminal device receives the QoS configuration information and/or the trigger condition corresponding to the QoS configuration information.

In some embodiments, the access network device sends identification information of the QoS configuration information and/or the trigger condition corresponding to the QoS configuration information to the terminal device. Then the terminal device receives the identification information of the QoS configuration information and/or the trigger condition corresponding to the QoS configuration information.

A process for operations at 610-620 is similar to that at 510-520 in above embodiments, and will not be repeated here.

In the method according to the embodiment of the present disclosure, the access network device directly determines a met trigger condition based on the state parameter, and adopts QoS configuration information corresponding to the met trigger condition to perform QoS control. Thus, the QoS configuration information directly determined by the access network device, which breaks a restriction that the core network device needs to configure for the access network device to change the QoS configuration information. And thus, this avoids a delay caused by communication between the core network device and the access network device and improves communication efficiency. Moreover, the core network device sends the QoS configuration information and/or the trigger condition corresponding to the QoS configuration information to the terminal device, and the terminal device may also perform data transmission based on the QoS configuration information, which improves communication efficiency.

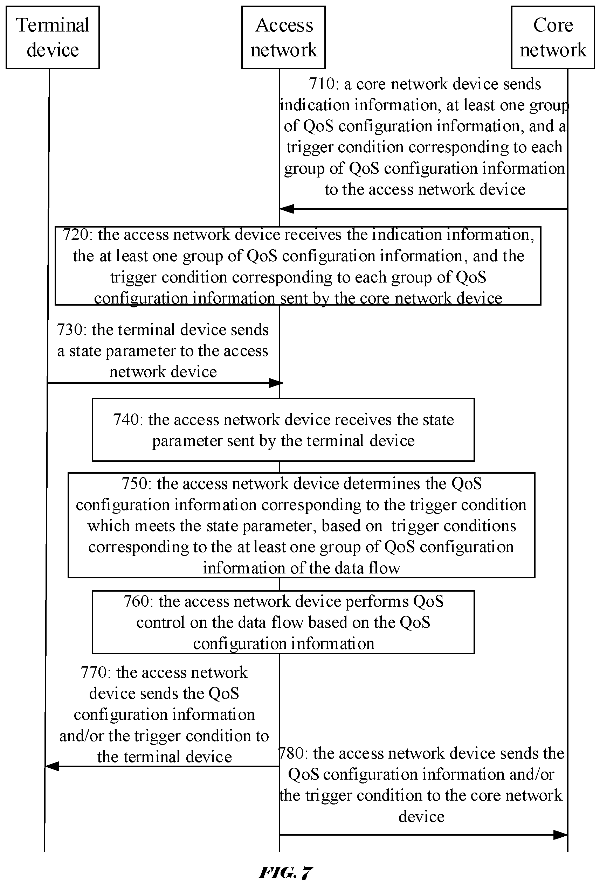

The QoS control method of the present disclosure will be described by taking examples below. FIG. 7 is a flow chart of a QoS control method according to an embodiment of the present disclosure, which is performed by a terminal device, an access network device, and a core network device as shown in FIG. 1. The method includes at least some of the following contents.

At 710, the core network device sends indication information, at least one group of QoS configuration information, and a trigger condition corresponding to each group of QoS configuration information to the access network device.

The indication information is configured to indicate a data flow.

At 720, the access network device receives the indication information, the at least one group of QoS configuration information, and the trigger condition corresponding to each group of QoS configuration information sent by the core network device.

At 730, the terminal device sends a state parameter to the access network device.

At 740, the access network device receives the state parameter sent by the terminal device.

It should be noted that operations at 730-740 are only taken as an example for illustration in embodiments of the present disclosure. In another embodiment, operations at 730-740 are optional, and operations at 750 may be directly performed without operations at 730-740.

At 750, the access network device determines, based on at least one trigger condition corresponding to the at least one group of QoS configuration information of the data flow, QoS configuration information corresponding to a trigger condition which meets the state parameter.

At 760, the access network device performs QoS control on the data flow based on the determined QoS configuration information.

At 770, the access network device sends the determined QoS configuration information and/or a corresponding trigger condition to the terminal device.

At 780, the access network device sends the determined QoS configuration information and/or the trigger condition to the core network device at 780.

Operations at 710-780 in embodiments of the present disclosure are similar to that at 410-440 in the above-mentioned embodiments in FIG. 4, and will not be repeated here.

It should be noted that operations at 770-780 are only taken as an example for illustration in embodiments of the present disclosure. In another embodiment, 7 operations at 70 and/or 780 are optional, and operations at 770 and/or 780 may not be performed.

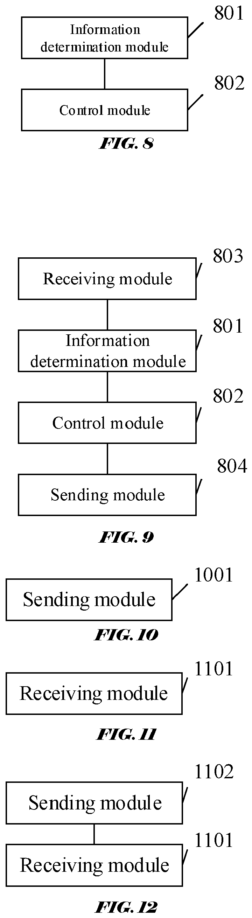

FIG. 8 is a block diagram of a QoS control apparatus according to an embodiment of the present disclosure. The apparatus is arranged in an access network device, and the apparatus includes an information determination module 801 and a control module 802.

The information determination module 801 is configured to determine, based on at least one trigger condition corresponding to at least one group of QoS configuration information of a data flow, QoS configuration information corresponding to a trigger condition which meets a state parameter.

The control module 802 is configured to perform QoS control on the data flow based on the QoS configuration information.

In some embodiments, as illustrated in FIG. 9, the apparatus further includes a receiving module 803. The receiving module 803 is configured to receive the at least one group of QoS configuration information, and the trigger condition corresponding to each group of QoS configuration information sent by the core network device.

In some embodiments, as illustrated in FIG. 9, the apparatus further includes a receiving module 803. The receiving module 803 is configured to receive identification information of each group of QoS configuration information sent by the core network device.

In some embodiments, as illustrated in FIG. 9, the apparatus further includes a receiving module 803. The receiving module 803 is configured to receive a priority of each group of QoS configuration information sent by the core network device.

In some embodiments, the receiving module 803 is configured to receive indication information, the at least one group of QoS configuration information, and the trigger condition corresponding to each group of QoS configuration information sent by the core network device.

The indication information is configured to indicate the data flow.

In some embodiments, the indication information includes an identifier of the data flow, or, the indication information includes a feature of the data flow.

In some embodiments, the QoS configuration information includes at least one of a QoS index identifier; a scheduling priority; allocation and retention priority; a code rate requirement; a transmission delay requirement; a BER requirement.

In some embodiments, the state parameter includes at least one of current time information; current location information of the terminal device to which the data flow belongs; current network information of the terminal device; current access information of the terminal device; current load information of access network device; and current capability information of the terminal device.

In some embodiments, the current time information is a current time point.

In some embodiments, the current location information of the terminal device is current cell information of the terminal device, or current tracking area information of the terminal device, or current latitude and longitude information of the terminal device.

In some embodiments, the network information of the terminal device is current PLMN or a network slice of the terminal device.

In some embodiments, the current access information of the terminal device is a network type of a network to which the terminal device accesses, or a frequency adopted by the terminal device.

In some embodiments, the current load information of the access network device is a current load capacity of the access network device, or a current load occupancy rate of the access network device.

In some embodiments, the current capability information of the terminal device is a current load capacity of the terminal device, or a load occupancy rate of the terminal device, or a computing capability of the terminal device, or a service processing capability of the terminal device.

In some embodiments, the trigger condition includes at least one of time information; location information; internet information; access information; load information; and capability information.

In some embodiments, the time information is a time point, or a time duration.

In some embodiments, the location information is cell information, or tracking area information, or latitude and longitude information.

In some embodiments, the network information is PLMN or a network slice.

In some embodiments, the access information is a network type, or a frequency.

In some embodiments, the load information is a load capacity of the access network device or a load occupancy rate of the access network device.

In some embodiments, the capability information is a load capacity, or a load occupancy rate, or a computing capability, or a service processing capability of the terminal device.

In some embodiments, the QoS configuration information corresponding to the trigger condition which meets the state parameter includes a plurality of groups of QoS configuration information. The control module 802 is configured to determine the group of QoS configuration information with a highest priority in the plurality of groups of QoS configuration information; and perform the QoS control on the data flow based on the group of QoS configuration information with the highest priority.

In some embodiments, as illustrated in FIG. 9, the apparatus further includes a receiving module 803 The receiving module 803 is configured to receive a state parameter sent by the terminal device.

In some embodiments, as illustrated in FIG. 9, the apparatus further includes a sending module 804. The sending module 804 is configured to send QoS configuration information and/or a trigger condition corresponding to the QoS configuration information to the terminal device. Alternatively, the sending module 804 is configured to send identification information of the QoS configuration information and/or the trigger condition corresponding to the QoS configuration information to the terminal device.

In some embodiments, as illustrated in FIG. 9, the apparatus further includes a sending module 804. The sending module 804 is configured to send QoS configuration information and/or a trigger condition corresponding to the QoS configuration information to the core network device. Alternatively, the sending module 804 is configured to send identification information of the QoS configuration information and/or the trigger condition corresponding to the QoS configuration information to the core network device.

In some embodiments, the data flow is a radio bearer, or the data flow is a QoS flow, or the data flow is a data transmission tunnel, or the data flow is a service data flow.

FIG. 10 is a block diagram of a QoS control apparatus according to an embodiment of the present disclosure. The apparatus is arranged in a core network device. The apparatus includes a sending module 1001. The sending module 1001 is configured to send at least one group of QoS configuration information of a data flow, and a trigger condition corresponding to each group of QoS configuration information to the access network device.

The at least one group of QoS configuration information and the trigger condition corresponding to each group of QoS configuration information are configured to indicate the access network device to perform QoS control on the data flow.

In some embodiments, the sending module 1001 is configured to send identification information of each group of QoS configuration information to the access network device.

In some embodiments, the sending module 1001 is configured to send a priority of each group of QoS configuration information to the access network device.

In some embodiments, the sending module 1001 is configured to send indication information, the at least one group of QoS configuration information, and the trigger condition corresponding to each group of QoS configuration information to the access network device.

The indication information is configured to indicate the data flow.

In some embodiments, the indication information includes an identifier of the data flow, or, the indication information includes a feature of the data flow.

In some embodiments, the QoS configuration information includes at least one of a QoS index identifier; a scheduling priority; allocation and retention priority; a code rate requirement; a transmission delay requirement; and a BER requirement.

In some embodiments, the state parameter includes at least one of current time information; current location information of the terminal device to which the data flow belongs; current network information of the terminal device; current access information of the terminal device; current load information of access network device; and current capability information of the terminal device.

In some embodiments, the current time information is a current time point;

In some embodiments, the current location information of the terminal device is current cell information of the terminal device, or current tracking area information of the terminal device, or current latitude and longitude information of the terminal device.

In some embodiments, the network information of the terminal device is PLMN or a network slice of the terminal device.

In some embodiments, the current access information of the terminal device is a network type of a network accessed by the terminal device, or a frequency adopted by the terminal device.

In some embodiments, the current load information of the access network device is a current load capacity of the access network device, or a current load occupancy rate of the access network device.

In some embodiments, the current capability information of the terminal device is a current load capacity of the terminal device, or a load occupancy rate of the terminal device, or a computing capability of the terminal device, or a service processing capability of the terminal device.

In some embodiments, the trigger condition includes at least one of time information; location information; internet information; access information; load information; and capability information.

In some embodiments, the time information is a time point, or a time duration.

In some embodiments, the location information is cell information, or tracking area information, or latitude and longitude information.

In some embodiments, the network information is PLMN information or network slice information.

In some embodiments, the access information is a network type or a frequency.

In some embodiments, the load information is a load capacity of the access network device or a load occupancy rate of the access network device.

In some embodiments, the capability information is a load capacity, or a load occupancy rate, or a computing capability, or a service processing capability of the terminal device.

In some embodiments, the sending module 1001 is configured to send QoS configuration information and/or a trigger condition corresponding to the QoS configuration information to the terminal device. Alternatively, the sending module 1001 is configured to send identification information of the QoS configuration information and/or the trigger condition corresponding to the QoS configuration information to the terminal device.

In some embodiments, the data flow is a radio bearer, or the data flow is a QoS flow, or the data flow is a data transmission tunnel, or the data flow is a service data flow.

FIG. 11 is a block diagram of a QoS control apparatus according to an embodiment of the present disclosure. The apparatus is arranged in a terminal device. The apparatus includes a receiving module 1101. The receiving module 1101 is configured to receive QoS configuration information, and/or a trigger condition corresponding to the QoS configuration information.

The QoS configuration information and/or the trigger condition corresponding to the QoS configuration information are determined by the access network device based on at least one trigger condition corresponding to at least one group of QoS configuration information of a data flow and a state parameter, and the QoS configuration information is configured to indicate the access network device to perform QoS control on the data flow.

In some embodiments, the receiving module 1101 is configured to receive identification information of the QoS configuration information and/or the trigger condition corresponding to the QoS configuration information.

In some embodiments, the receiving module 1101 is configured to receive the QoS configuration information and/or the trigger condition corresponding to the QoS configuration information sent by the access network device. Alternatively, the receiving module 1101 is configured to receive the QoS configuration information and/or the trigger condition corresponding to the QoS configuration information sent by the core network device.

In some embodiments, as illustrated in FIG. 12, the apparatus further includes a sending module 1102. The sending module 1102 is configured to send the state parameter to the access network device.

In some embodiments, the state parameter includes at least one of current time information; current location information of the terminal device to which the data flow belongs; current network information of the terminal device; current access information of the terminal device; current load information of access network device; and current capability information of the terminal device.

In some embodiments, the current time information is a current time point.

In some embodiments, the current location information of the terminal device is current cell information of the terminal device, or current tracking area information of the terminal device, or current latitude and longitude information of the terminal device.

In some embodiments, the network information of the terminal device is PLMN or a network slice of the terminal device.

In some embodiments, the current access information of the terminal device is a network type of a network accessed by the terminal device, or a frequency adopted the terminal device.

In some embodiments, the current load information of the access network device is a current load capacity of the access network device, or a current load occupancy rate of the access network device.

In some embodiments, the current capability information of the terminal device is a current load capacity of the terminal device, or a load occupancy rate of the terminal device, or a computing capability of the terminal device, or a service processing capability of the terminal device.

In some embodiments, the trigger condition includes at least one of time information; location information; internet information; access information; load information; and capability information.

In some embodiments, the time information is a time point, or a time duration.

In some embodiments, the location information is cell information, or tracking area information, or latitude and longitude information.

In some embodiments, the network information is PLMN or a network slice.

In some embodiments, the access information is a network type, or a frequency.

In some embodiments, the load information is a load capacity of the access network device or a load occupancy rate of the access network device.

In some embodiments, the capability information is a load capacity, or a load occupancy rate, or a computing capability, or a service processing capability of the terminal device.

In some embodiments, the QoS configuration information includes at least one of QoS index identification; a scheduling priority; allocation and retention priority; a code rate requirement; a transmission delay requirement; and a BER requirement.

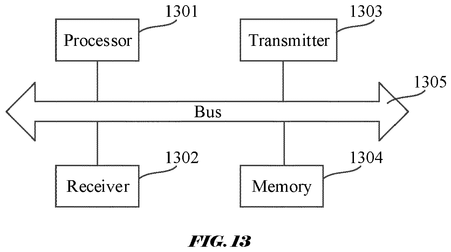

FIG. 13 is a structural schematic diagram of a communication device according to an embodiment of the present disclosure. The communication device includes a processor 1301, a receiver 1302, a transmitter 1303, a memory 1304, and a bus 1305.

The processor 1301 includes one or more processing cores, and the processor 1301 executes various functional applications and information processing by running software programs and modules.

The receiver 1302 and the transmitter 1303 may be implemented as a communication component, and the communication component may be a communication chip.

The memory 1304 is connected to the processor 1301 through the bus 1305.

The memory 1304 may be configured to store at least one program code, and the processor 1301 is configured to execute the at least one program code, so as to implement various operations in the foregoing method embodiments.

In addition, the communication device may be a terminal device, an access network device, or a core network device. The memory 1304 may be realized by any type of a volatile or a non-volatile storage device or a combination thereof, and the volatile or non-volatile storage device includes, but not limited to, a magnetic disk or an optical disk, an Electrically Erasable Programmable Read-only Memory (EEPROM), an Erasable Programmable Read Only Memory (EPROM), a Static Anytime Access Memory (SRAM), a Read Only Memory (ROM), a Magnetic Memory, a Flash Memory, and a Programmable Read Only Memory (PROM).

In an exemplary embodiment, a computer-readable storage medium is also provided, and an executable program code is stored in the readable storage medium. The executable program code is loaded and executed by a processor to implement the QoS control method according to the above method embodiments.

In an exemplary embodiment, a chip is provided, the chip includes a programmable logic circuit and/or program instructions. When the chip runs on a terminal device, an access network device, or a core network device, it is configured to realize the QoS control method according to above method embodiments.

In an exemplary embodiment, a computer program product is provided. When the computer program product is executed by a processor of a terminal device, an access network device, or a core network device, it is configured to realize the QoS control method according to the above method embodiments.

Those with ordinary skills in the art may understand that all or part of the operations for implementing the above embodiments may be completed by hardware, and may also be completed by instructing related hardware through a program. The program may be stored in a computer-readable storage medium. The above-mentioned storage medium may be a read-only memory, a magnetic disk or an optical disk, and the like.

The above are only specific embodiments of the present disclosure, but the protection scope of the present disclosure is not limited thereto. Any modifications, equivalent replacements, and improvements made within the spirit and principles of the present disclosure should be determined by the protection scope of the claims.

## Claims

1. A Quality of Service (QoS) control method, performed by an access network device, comprising:
determining QoS configuration information corresponding to a trigger condition which meets a state parameter, based on at least one trigger condition corresponding to at least one group of QoS configuration information of a data flow; and
performing QoS control on the data flow based on the QoS configuration information.

2. The method according to claim 1, further comprising:
receiving the at least one group of QoS configuration information and a trigger condition corresponding to each group of QoS configuration information sent by a core network device.

3. The method according to claim 2, further comprising:
receiving identification information of the each group of QoS configuration information sent by the core network device.

4. The method according to claim 2, further comprising:
receiving a priority of the each group of QoS configuration information sent by the core network device.

5. The method according to claim 2, wherein the receiving the at least one group of QoS configuration information and a trigger condition corresponding to each group of QoS configuration information sent by a core network device, comprises:
receiving indication information, the at least one group of QoS configuration information, and the trigger condition corresponding to the each group of QoS configuration information sent by the core network device;
wherein the indication information is configured to indicate the data flow.

6. The method according to claim 5, wherein the indication information comprises an identifier of the data flow, or the indication information comprises a feature of the data flow.

7. The method according to any one of claims 1 to 6, wherein the QoS configuration information comprises at least one of:
a QoS index identifier; a scheduling priority; allocation and retention priority; a code rate requirement; a transmission delay requirement; and a BER requirement.

8. The method according to any one of claims 1 to 7, wherein the state parameter comprises at least one of:
current time information; current location information of a terminal device to which the data flow belongs; current network information of the terminal device; current access information of the terminal device; current load information of the access network device; and current capability information of the terminal device.

9. The method according to claim 8, wherein the current time information is a current time point.

10. The method according to claim 8, wherein the current location information of the terminal device is a current cell of the terminal device, or a current tracking area of the terminal device, or a current latitude and longitude of the terminal device.

11. The method according to claim 8, wherein the current network information of the terminal device is PLMN or a network slice of the terminal device.

12. The method according to claim 8, wherein the current access information of the terminal device is a network type of a network to which the terminal device accesses, or a frequency adopted by the terminal device.

13. The method according to claim 8, wherein the current load information of the access network device is a current load capacity of the access network device, or a current load occupancy rate of the access network device.

14. The method according to claim 8, wherein the current capability information of the terminal device is a current load capacity of the terminal device, or a load occupancy rate of the terminal device, or a computing capability of the terminal device, or a service processing capability of the terminal device.

15. The method according to any one of claims 1 to 14, wherein the trigger condition comprises at least one of: time information; location information; network information; access information; load information; and capability information.

16. The method according to claim 15, wherein the time information is a time point or a time duration.

17. The method according to claim 15, wherein the location information is cell information, or tracking area information, or longitude and latitude information.

18. The method according to claim 15, wherein the network information is PLMN information or network slice information.

19. The method according to claim 15, wherein the access information is a network type or a frequency.

20. The method according to claim 15, wherein the load information is a load capacity of the access network device or a load occupancy rate of the access network device.

21. The method according to claim 15, wherein the capability information is a load capacity, a load occupancy rate, a computing capability, or a service processing capability of a terminal device.

22. The method according to claim 1, wherein the QoS configuration information corresponding to the trigger condition which meets the state parameter comprises a plurality of groups of QoS configuration information; and
the performing QoS control on the data flow based on the QoS configuration information comprises:
determining a group of QoS configuration information with a highest priority in the plurality of groups of QoS configuration information;
performing the QoS control on the data flow based on the group of QoS configuration information with the highest priority.

23. The method according to claim 1, further comprising:
receiving the state parameter sent by a terminal device.

24. The method according to claim 1, further comprising:
sending the QoS configuration information and/or the trigger condition corresponding to the QoS configuration information to a terminal device; or
sending identification information of the QoS configuration information and/or the trigger condition corresponding to the QoS configuration information to the terminal device.

25. The method according to claim 1, further comprising:
sending the QoS configuration information and/or the trigger condition corresponding to the QoS configuration information to a core network device; or
sending identification information of the QoS configuration information and/or the trigger condition corresponding to the QoS configuration information to the core network device.

26. The method according to any one of claims 1 to 25, wherein the data flow is a radio bearer, a QoS flow, a data transmission tunnel, or a service data flow.

27. A Quality of Service (QoS) control method, performed by a core network device, comprising:
sending at least one group of QoS configuration information of a data flow and a trigger condition corresponding to each group of QoS configuration information to an access network device;
wherein the at least one group of QoS configuration information and the trigger condition corresponding to the each group of QoS configuration information are configured to indicate the access network device to perform QoS control on the data flow.

28. The method according to claim 27, further comprising:
sending identification information of the each group of QoS configuration information to the access network device.

29. The method according to claim 27, further comprising:
sending a priority of the each group of QoS configuration information to the access network device.

30. The method according to claim 27, wherein the sending at least one group of QoS configuration information of a dataflow and a trigger condition corresponding to each group of QoS configuration information to an access network device, comprises:
sending indication information, the at least one group of QoS configuration information, and the trigger condition corresponding to each group of QoS configuration information to the access network device;
wherein the indication information is configured to indicate the data flow.

31. The method according to claim 30, wherein the indication information comprises an identifier of the data flow, or the indication information comprises a feature of the data flow.

32. The method according to any one of claims 27 to 31, wherein the QoS configuration information comprises at least one of:
a QoS index identifier; a scheduling priority; allocation and retention priority; a code rate requirement; a transmission delay requirement; and a BER requirement.

33. The method according to any one of claims 27 to 32, wherein the state parameter comprises at least one of:
current time information; current location information of a terminal device to which the data flow belongs; current network information of the terminal device; current access information of the terminal device; current load information of the access network device; and current capability information of the terminal device.

34. The method according to claim 33, wherein the current time information is a current time point.

35. The method according to claim 33, wherein the current location information of the terminal device is a current cell of the terminal device, or a current tracking area of the terminal device, or a current latitude and longitude of the terminal device.

36. The method according to claim 33, wherein the current network information of the terminal device is PLMN or a network slice of the terminal device.

37. The method according to claim 33, wherein the current access information of the terminal device is a network type of a network to which the terminal device accesses, or a frequency adopted by the terminal device.

38. The method according to claim 33, wherein the current load information of the access network device is a current load capacity of the access network device, or a current load occupancy rate of the access network device.

39. The method according to claim 33, wherein the current capability information of the terminal device is a current load capacity of the terminal device, a load occupancy rate of the terminal device, a computing capability of the terminal device, or a service processing capability of the terminal device.

40. The method according to any one of claims 27 to 39, wherein the trigger condition comprises at least one of: time information; location information; network information; access information; load information; and capability information.

41. The method according to claim 40, wherein the time information is a time point or a time duration.

42. The method according to claim 40, wherein the location information is cell information, or tracking area information, or longitude and latitude information.

43. The method according to claim 40, wherein the network information is PLMN information or network slice information.

44. The method according to claim 40, wherein the access information is a network type or a frequency.

45. The method according to claim 40, wherein the load information is a load capacity of the access network device or a load occupancy rate of the access network device.

46. The method according to claim 40, wherein the capability information is a load capacity, or a load occupancy rate, or a computing capability, or a service processing capability of the terminal device.

47. The method according to claim 27, further comprising:
sending QoS configuration information and/or a trigger condition corresponding to the QoS configuration information to a terminal device; or
sending identification information of the QoS configuration information and/or the trigger condition corresponding to the QoS configuration information to the terminal device.

48. The method according to any one of claims 27 to 47, wherein the data flow is a radio bearer, a QoS flow, a data transmission tunnel, or a service data flow.

49. A Quality of Service (QoS) control method, performed by a terminal device, comprising:
receiving QoS configuration information and/or a trigger condition corresponding to the QoS configuration information;
wherein the QoS configuration information and/or the trigger condition corresponding to the QoS configuration information are determined by an access network device based on at least one trigger condition corresponding to at least one group of QoS configuration information of a data flow and a state parameter, and the QoS configuration information is configured to indicate the access network device to perform QoS control on the data flow.

50. The method according to claim 49, wherein the receiving QoS configuration information and/or a trigger condition corresponding to the QoS configuration information comprises:
receiving identification information of the QoS configuration information and/or the trigger condition corresponding to the QoS configuration information.

51. The method according to claim 49, wherein the receiving QoS configuration information and/or a trigger condition corresponding to the QoS configuration information comprises:
receiving the QoS configuration information and/or the trigger condition corresponding to the QoS configuration information sent by an access network device, or
receiving the QoS configuration information and/or the trigger condition corresponding to the QoS configuration information sent by a core network device.

52. The method according to claim 49, further comprising:
sending the state parameter to the access network device.

53. The method according to any one of claims 49 to 52, wherein the state parameter comprises at least one of:
current time information; current location information of the terminal device to which the data flow belongs; current network information of the terminal device; current access information of the terminal device; current load information of the access network device; and current capability information of the terminal device.

54. The method according to claim 53, wherein the current time information is a current time point.

55. The method according to claim 53, wherein the current location information of the terminal device is a current cell of the terminal device, a current tracking area of the terminal device, or a current latitude and longitude of the terminal device.

56. The method according to claim 53, wherein the current network information of the terminal device is PLMN or a network slice of the terminal device.

57. The method according to claim 53, wherein the current access information of the terminal device is a network type of a network to which the terminal device accesses, or a frequency adopted by the terminal device.

58. The method according to claim 53, wherein the current load information of the access network device is a current load capacity of the access network device, or a current load occupancy rate of the access network device.

59. The method according to claim 53, wherein the current capability information of the terminal device is a current load capacity of the terminal device, or a load occupancy rate of the terminal device, or a computing capability of the terminal device, or a service processing capability of the terminal device.

60. The method according to any one of claims 49 to 59, wherein the trigger condition comprises at least one of: time information; location information; network information; access information; load information; and capability information.

61. The method according to claim 60, wherein the time information is a time point or a time duration.

62. The method according to claim 60, wherein the location information is cell information, or tracking area information, or longitude and latitude information.

63. The method according to claim 60, wherein the network information is PLMN information or network slice information.

64. The method according to claim 60, wherein the access information is a network type or a frequency.

65. The method according to claim 60, wherein the load information is a load capacity of the access network device or a load occupancy rate of the access network device.

66. The method according to claim 60, wherein the capability information is a load capacity, or a load occupancy rate, or a computing capability, or a service processing capability of the terminal device.

67. The method according to any one of claims 49 to 66, wherein the QoS configuration information comprises at least one of:
a QoS index identifier; a scheduling priority; allocation and retention priority; a code rate requirement; a transmission delay requirement; and a BER requirement.

68. A Quality of Service (QoS) control apparatus, arranged in an access network device, comprising:
an information determination module, configured to determine QoS configuration information corresponding to a trigger condition which meets a state parameter, based on at least one trigger condition corresponding to at least one group of QoS configuration information of a data flow;
a control module, configured to perform QoS control on the data flow based on the QoS configuration information.

69. A Quality of Service (QoS) control apparatus, arranged in a core network device, comprising:
a sending module, configured to send at least one group of QoS configuration information of a data flow and a trigger condition corresponding to each group of QoS configuration information to an access network device;
wherein the at least one group of QoS configuration information and the trigger condition corresponding to the each group of QoS configuration information are configured to indicate the access network device to perform QoS control on the data flow.

70. A Quality of Service (QoS) control apparatus, arranged in a terminal device, comprising:
a receiving module, configured to receive QoS configuration information and/or a trigger condition corresponding to the QoS configuration information;
wherein the QoS configuration information and/or the trigger condition corresponding to the QoS configuration information are determined by an access network device based on at least one trigger condition corresponding to at least one group of QoS configuration information of a data flow and a state parameter, and the QoS configuration information is configured to indicate the access network device to perform QoS control on the data flow.

71. An access network device, comprising:
a processor;
a transceiver connected to the processor;
a memory for storing an executable program code of the processor;
wherein the processor is configured to load and execute the executable program code to implement the Quality of Service (QoS) control method according to any one of claims 1 to 26.

72. A core network device, comprising:
a processor;
a transceiver connected to the processor;
a memory for storing an executable program code of the processor;
wherein the processor is configured to load and execute the executable program code to implement the Quality of Service (QoS) control method according to any one of claims 27 to 48.

73. A terminal device, comprising:
a processor;
a transceiver connected to the processor;
a memory for storing an executable program code of the processor;
wherein the processor is configured to load and execute the executable program code to implement the Quality of Service (QoS) control method according to any one of claims 49 to 67.

74. A computer-readable storage medium, storing an executable program code, which is loaded and executed by a processor to implement the QoS control method according to any one of claims 1 to 67.
